# FASCICULE DE BREVET EUROPEEN

(11) **EP 1 267 248 B1**
(45) Date de publication et mention de la délivrance du brevet: **21.04.2010**
(21) Numéro de dépôt: 02354095.8
(22) Date de dépôt: 11.06.2002
(51) Int. Cl.: G06F 21/02

(54) **Stockage protégé d'une donnée dans un circuit intégré**
Geschützte Speicherung von Daten in einer integrierten Schaltung
Protected storage of a data in an integrated circuit

(30) Priorité: 11.06.2001 FR 0107591
(43) Date de publication de la demande: 18.12.2002
(73) Titulaire: STMicroelectronics S.A., 92120 Montrouge (FR)
(72) Inventeur: Orlando, William, 13790 Peynier (FR); Wuidart, Luc, 83910 Pourrieres (FR); Bardouillet, Michel, 13790 Rousset (FR); Balthazar, Pierre, 13100 Aix en Provence (FR)
(74) Mandataire: de Beaumont, Michel

(56) Documents cités:
- EP-A- 0 128 672
- FR-A- 2 796 175
- GB-A- 2 140 592
- US-A- 5 818 738
- US-A- 5 917 909
- US-B1- 6 233 339

## Description

La présente invention concerne la protection d'une quantité ou donnée secrète dans un circuit intégré, par exemple, une carte à puce. Par donnée secrète, on entend au sens de la présente invention n'importe quel mot numérique représentant une donnée ou une adresse quelconque et que l'on souhaite protéger contre un piratage.

On connaît de nombreuses méthodes permettant de crypter des données stockées dans des mémoires externes à une unité centrale de traitement que ces mémoires soient volatiles ou non. De tels procédés permettent de rendre inutilisables les données lues directement dans la mémoire de manière physique (par une attaque au moyen de capteurs électriques pour pirater la donnée). Ces procédés connus souffrent d'une faiblesse qui est que la clé de cryptage des données doit elle aussi être stockée dans une mémoire non volatile (par exemple, une mémoire EEPROM ou une mémoire à programmation unique OTP). Cela constitue un point de fragilité du système dans la mesure où cette clé peut être elle-même récupérée par attaque physique.

Pour tenter d'améliorer la sécurité, on a déjà proposé de brouiller la clé de cryptage elle-même. Toutefois, les conditions de brouillage sont les mêmes pour toutes les puces de circuit intégré. Il est donc possible, pour un pirate, de récupérer une clé dans une mémoire non volatile d'une puce authentique afin de la recopier dans des puces reproduites industriellement de façon non autorisée et cloner ou imiter ainsi une fabrication en série, ou afin d'en déduire les éléments de cryptage.

Le document US-B-6 233 339 décrit une unité de traitement cryptographique dans laquelle des codes et des clés de chiffrement sont générés et utilisés dans un espace protégé du circuit.

Le document US-A-5 917 909 décrit un système pour tester l'authenticité de données en déterminant les propriétés physiques des données à partir d'un état électrique réglable de façon irréversible d'un circuit présent séparément sur le circuit intégré, et en utilisant la propriété électrique du circuit pour établir une valeur caractéristique pour la donnée.

Le document US-A-5 818 738 décrit un procédé de test de l'authenticité de données en évaluant les temps de programmation différents de cellules mémoires d'une mémoire E²PROM.

Le document EP-A-0 128 672 décrit un dispositif de sécurité pour un système informatique dans lequel l'alimentation nécessaire au fonctionnement de moyens de stockage est véhiculée par un conducteur entourant toute la surface interne du boîtier.

La présente invention vise à proposer un procédé de protection d'une donnée numérique dans un circuit intégré afin d'éviter le piratage éventuel de cette donnée stockée. Plus généralement, l'invention vise à proposer un procédé de masquage, codage, brouillage, cryptage, etc. d'une donnée à stocker dans une mémoire interne ou externe à une puce de circuit intégré.

Pour atteindre ces objets et d'autres, la présente invention prévoit un procédé de stockage d'au moins une première donnée dans une mémoire, consistant :
à effectuer une combinaison de ladite première donnée avec au moins une deuxième donnée physique issue d'au moins un réseau de paramètres physiques d'un circuit intégré ; et
à mémoriser uniquement le résultat de cette combinaison.

Selon un mode de réalisation de la présente invention, ladite deuxième donnée physique est sensible aux dispersions technologiques et de fabrication dudit circuit intégré qui intègre ledit réseau de paramètres physiques.

Selon un mode de réalisation de la présente invention, la première donnée est une adresse d'un programme.

Selon un mode de réalisation de la présente invention, lors de l'écriture du programme dans une mémoire, on remplace les adresses de certains périphériques par l'adresse d'un circuit de décodage associée à la position d'une adresse protégée dans une table d'adresse.

Selon un mode de réalisation de la présente invention, au moins une adresse de périphérique est combinée avec la donnée physique pour stocker l'adresse protégée dans ladite table d'adresse.

Selon un mode de réalisation de la présente invention, la deuxième donnée physique est mémorisée de façon éphémère.

Selon un mode de réalisation de la présente invention, ladite combinaison servant à la mémorisation n'est rendue possible qu'une seule fois.

Selon un mode de réalisation de la présente invention, la donnée physique est inaccessible depuis l'extérieur du circuit intégré.

Selon un mode de réalisation de la présente invention, la donnée physique est commune à toutes les puces d'un même lot.

Selon un mode de réalisation de la présente invention, la donnée physique est différente d'une puce à l'autre d'un même lot.

Selon un mode de réalisation de la présente invention, la mémoire de stockage de la première donnée est interne au circuit intégré.

Selon un mode de réalisation de la présente invention, la mémoire de stockage de la première donnée est externe au circuit intégré.

L'invention prévoit également un procédé de lecture d'une donnée stockée, consistant :
à lire le résultat mémorisé ; et
à utiliser ladite deuxième donnée physique pour décoder ce résultat et restituer la première donnée.

L'invention prévoit également un procédé de protection d'au moins une première donnée à mémoriser.

Selon un mode de réalisation de la présente invention, le procédé est appliqué à la protection d'une donnée secrète devant être stockée dans le circuit intégré.

L'invention prévoit en outre un circuit intégré comportant :
au moins un réseau de paramètres physiques ;
au moins un combineur pour coder au moins une première donnée à protéger au moyen d'une deuxième donnée physique fournie par ledit réseau ; et
au moins un décodeur pour, en lecture, restituer la première donnée en clair en réutilisant la donnée physique.

Selon un mode de réalisation de la présente invention, le circuit comprend au moins une première mémoire de stockage de la donnée protégée.

Selon un mode de réalisation de la présente invention, le combineur est associé à des moyens d'invalidation de son fonctionnement après une écriture d'une donnée protégée dans la première mémoire du circuit.

Selon un mode de réalisation de la présente invention, le circuit comporte en outre une deuxième mémoire de stockage d'un programme, la première mémoire étant constituée par une table d'adresses stockées sous une forme codée au moyen de la donnée physique.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 illustre, sous forme de blocs et de façon très schématique, un mode de mise en oeuvre du procédé de stockage d'une donnée numérique selon la présente invention ;
la figure 2 illustre, sous forme de blocs et de façon très schématique, un mode de mise en oeuvre du procédé de lecture d'une donnée stockée selon la présente invention ;
la figure 3 représente, sous forme de blocs et de façon très schématique, un premier mode de réalisation d'une puce de circuit intégré selon la présente invention ;
la figure 4 représente, sous forme de blocs et de façon très schématique, un deuxième mode de réalisation d'une puce de circuit intégré selon la présente invention ;
la figure 5 représente un mode de réalisation préféré d'un réseau de paramètres physiques d'une puce de circuit intégré selon la présente invention ; et
les figures 6A et 6B illustrent, sous forme de chronogrammes, le fonctionnement du réseau de la figure 5.

Les mêmes éléments ont été désignés par les mêmes références aux différentes figures. Pour des raisons de clarté, seules les étapes du procédé et les éléments du circuit qui sont nécessaires à la compréhension de l'invention ont été représentés aux figures et seront décrits par la suite. En particulier, le procédé d'exploitation des données stockées par l'invention, ainsi que les algorithmes de traitement de ces données, sont parfaitement connus et ne seront pas détaillés, sauf en ce qui concerne la fourniture de la donnée protégée faisant l'objet de l'invention.

Une caractéristique de la présente invention est de coder une donnée devant être mémorisée dans une puce de circuit intégré en combinant cette donnée avec un mot numérique provenant d'un réseau de paramètres physiques.

Un tel réseau de paramètres physiques est en lui-même connu, par exemple du brevet américain 6 161 213, et fournit une grandeur (généralement analogique) liée à la fabrication de la puce de circuit intégré. La grandeur fournie par le réseau de paramètres physiques est généralement sensible aux dispersions technologiques et de fabrication et est donc différente d'un lot (plaquette ou groupe de plaquettes) de puces à un autre, voire d'une puce à une autre d'un même lot.

Des réseaux de paramètres physiques sont connus dans des procédés d'authentification afin de garantir qu'une donnée provient bien d'une puce de circuit intégré valide. En particulier, on se sert généralement d'un réseau de paramètres physiques pour détecter des fabrications pirates de clones de circuits intégrés à grande échelle qui ne peuvent reproduire les paramètres technologiques propres à la fabrication authentique. Classiquement, les réseaux de paramètres physiques sont utilisés pour fournir un identifiant de la puce, permettant à un dispositif externe (par exemple, un lecteur de cartes à puce) de vérifier que la puce de circuit intégré est bien issue d'une fabrication authentique.

Au sens de l'invention, un réseau de paramètres physiques fournit au moins une grandeur (transformable en mot numérique) liée à la fabrication du circuit intégré et qui est, de surcroît, inobservable en ce sens que le mot numérique ne peut pas être détecté par observation de la puce, à la différence d'un réseau de fusibles ou analogue.

Selon la présente invention, la donnée à mémoriser n'est ni stockée en clair, ni seulement cryptée par des méthodes classiques. Elle est stockée sous forme complètement incompréhensible ou inexploitable pour un pirate dans la mesure où le mot numérique avec lequel elle est combinée est propre à la puce de circuit intégré ayant effectué la combinaison. De plus, le réseau de paramètres physiques étant préférentiellement sensible aux dispersions technologiques et de procédé de fabrication, le mot servant au codage est lié à la fabrication de la puce de circuit intégré.

Par codage, on entend au sens de la présente invention, tout traitement numérique appliqué à la donnée à protéger et à la donnée issue du réseau de paramètres physiques (en ayant le cas échéant recours à d'autres données). Pour simplifier, on fera référence au terme codage qui englobe donc, au sens de l'invention, les notions de combinaison, de cryptage, etc. pour brouiller, masquer ou plus généralement protéger une donnée.

Selon l'invention, la lecture de la donnée stockée dans une mémoire, qu'elle soit interne ou externe à la puce de circuit intégré ayant effectué la combinaison requiert, de nouveau, l'utilisation du mot numérique issu du réseau de paramètres physiques pour être en mesure de décoder la donnée protégée et la fournir en clair à un circuit d'exploitation classique.

De préférence, le mot numérique issu du réseau de paramètres physiques n'est pas conservé de façon permanente dans le circuit intégré mais n'est généré que (de façon éphémère) pour stocker ou lire la donnée protégée. Ce mot numérique ne sort jamais (n'est jamais disponible sur les plots) de la puce. Il est en quelque sorte autoprotégé depuis la fabrication. De plus, il n'a pas besoin d'être connu lors de l'écriture de la donnée à protéger.

On fera par la suite référence au cas où la mémoire de stockage de la donnée protégée est intégrée au circuit effectuant la combinaison. On notera toutefois que tout ce qui sera exposé se transpose aisément au cas d'une mémoire externe.

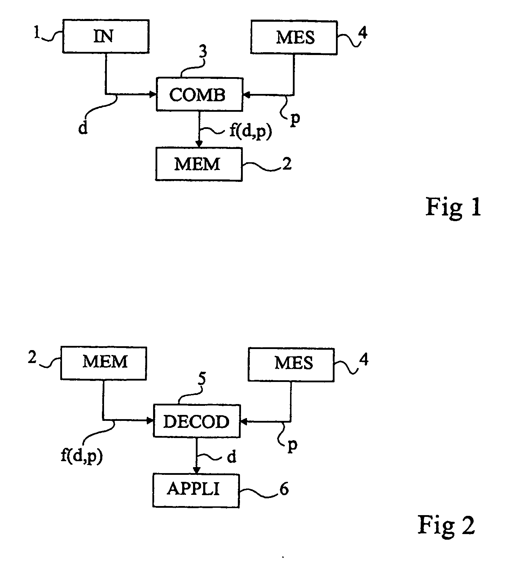

La figure 1 illustre, de façon très schématique et sous forme de blocs, un mode de mise en oeuvre du procédé de stockage selon la présente invention.

Une donnée d devant être stockée de façon codée est introduite (bloc 1, IN) dans la puce de circuit intégré. La donnée peut provenir de tout dispositif externe à la puce de circuit intégré. Un premier exemple d'application de la présente invention concerne des procédés ayant recours à une clé dite privée présente dans le circuit intégré à authentifier et à une clé dite publique dépendant de cette clé privée et stockée dans un dispositif externe. Selon cet exemple d'application, la donnée d est constituée par la clé privée qui, de façon classique, doit être stockée, de façon permanente dans la puce du circuit intégré (généralement dans une mémoire EEPROM). La clé privée est fournie par un système sécurisé lors de son inscription dans la puce de circuit intégré.

Selon l'invention, la donnée d n'est pas directement stockée dans une mémoire 2 (MEM) mais est combinée (bloc 3, COMB) avec une donnée dite physique p issue d'une mesure (bloc 4, MES) d'une grandeur fournie par un réseau de paramètres physiques de la puce de circuit intégré. La valeur f(d, p) fonction de cette combinaison est stockée dans la mémoire 2 (par exemple, une mémoire EEPROM). Cette combinaison est différente d'une puce à l'autre, pourvu que la donnée d et/ou la donnée p soit différente entre les deux puces.

La figure 2 illustre, par une vue à rapprocher de celle de la figure 1, un procédé d'extraction d'une donnée stockée de façon codée par la présente invention. La donnée mémorisée f(d, p) est lue de la mémoire 2 et doit être décodée (bloc 5, DECOD) afin de pouvoir fournir la donnée d à l'application la requérant (bloc 6, APPLI). Selon l'invention, le décodage 5 est effectué en appliquant l'opération inverse à celle du codage, donc en réutilisant la donnée physique p issue, de préférence, d'une nouvelle mesure (bloc 4, MES) de la grandeur fournie par le réseau de paramètres physiques.

Selon un mode de réalisation préféré de la présente invention, la combinaison (bloc 3, figure 1) destinée à permettre le stockage sous forme codée de la donnée protégée n'est rendue accessible que lors du stockage initial. Par exemple, on pourra prévoir un fusible ou un dispositif équivalent pour inhiber la fonctionnalité du combineur après une première utilisation. Cela améliore encore la sécurité contre un piratage de la donnée protégée.

Un avantage qu'il y a à coder la donnée d à stocker au moyen d'une grandeur issue d'un réseau de paramètres physiques est que le mot binaire servant au codage est différent d'une puce à l'autre ou à tout le moins d'un lot de puces à un autre lot de puces. Par conséquent, le mot binaire représentant la clé en mémoire n'est utilisable que par la puce dans laquelle ce mot a été inscrit lors de la mémorisation de la donnée d.

Un autre avantage de la présente invention est qu'en prévoyant une génération éphémère du mot binaire issu du réseau de paramètres physiques, le paramètre p qui personnalise le codage à chaque puce ne peut pas être récupéré par un pirate de façon statique (c'est-à-dire qu'il n'est pas visible quand il n'est pas utilisé).

Un autre avantage de l'invention est que ce paramètre de personnalisation n'est que très peu utilisé. En effet, on ne le génère que lors de l'écriture et de la lecture de la donnée protégée. Il est par conséquent difficile de le pirater.

Un autre avantage de l'invention est que la donnée physique p ne sort jamais de la puce.

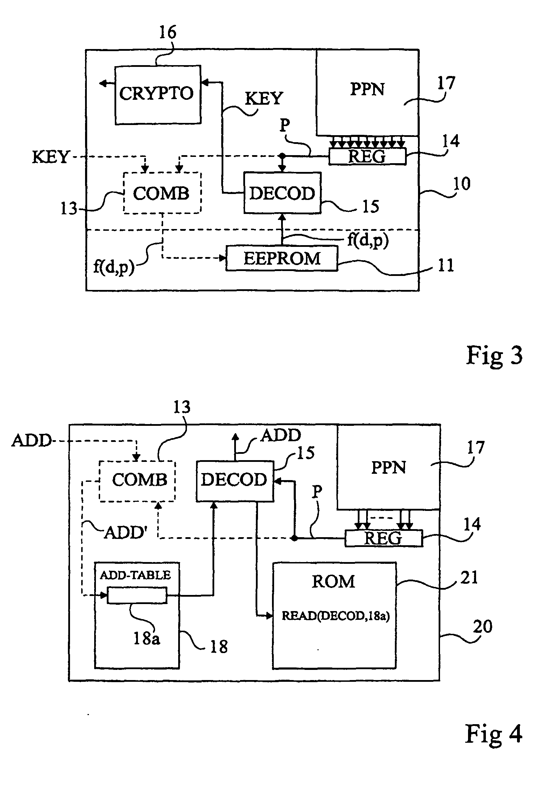

La figure 3 représente, de façon très schématique, une puce 10 de circuit intégré selon un premier exemple d'application de la présente invention. Cet exemple concerne l'application du procédé de stockage et de lecture au brouillage d'une clé (KEY) (par exemple, une clé privée d'un protocole de cryptage asymétrique, RSA) qui doit être stockée dans une mémoire EEPROM 11 de la puce 10.

Lors de la personnalisation de la puce de circuit intégré par l'introduction de sa clé privée, cette clé est fournie par un système sécurisé (non représenté) à un circuit 13 opérant le brouillage, masquage, codage, cryptage ou combinaison selon l'invention (COMB). Le circuit 13 reçoit également un mot binaire p issu, par exemple, d'un registre 14 (REG) de stockage de la grandeur numérique liée à un réseau de paramètres physiques 15 (PPN) intégré avec la puce. Le résultat de la combinaison opérée par le circuit 13 f(d, p) est fourni à la mémoire EEPROM 11.

Selon un mode de réalisation préféré de la présente invention, le circuit de combinaison 13 est invalidé une fois la clé privée stockée dans la mémoire EEPROM de façon brouillée. C'est pourquoi, en figure 3, le circuit 13 et les différentes liaisons nécessaires au stockage de la clé KEY ont été représentées en pointillés. Ce sont les éléments qui ne servent qu'à la personnalisation de la puce.

En variante, les éléments dits de personnalisation sont maintenus actifs pour permettre l'enregistrement de données protégées pendant la vie du produit.

Pour permettre la lecture et l'exploitation de cette clé stockée par des procédés d'authentification classiques, la puce 10 de circuit intégré comporte un circuit 15 de décodage restituant la clé KEY à un module 16 de cryptographie (CRYPTO) classique représentant l'application de la donnée protégée stockée par le procédé de l'invention. Le circuit 15 reçoit, comme le circuit 13, la donnée physique p issue du registre 14 à chaque besoin de lecture. Elle décode la donnée stockée f(d, p) issue de la mémoire EEPROM pour restituer la clé KEY.

Selon un mode de réalisation préféré de l'invention, la donnée physique p extraite du réseau de paramètres physiques 17 est stockée dans le registre 14 que temporairement. Selon un premier exemple, on pourra prévoir un registre 14 volatil s'effaçant lorsque la puce n'est plus alimentée. Par conséquent, à chaque sortie de la puce d'un lecteur de carte à puce, cette donnée disparaît. Selon un deuxième exemple, on pourra prévoir des moyens de temporisation pour faire disparaître la donnée physique p du registre 14 même alors que la puce est encore dans un lecteur mais après une durée prédéterminée ayant permis son exploitation par le circuit 15 en lecture.

En variante, le registre 14 est omis, et les bits de résultat du réseau 17 sont directement envoyés aux circuits de brouillage 13 et de décodage 15.

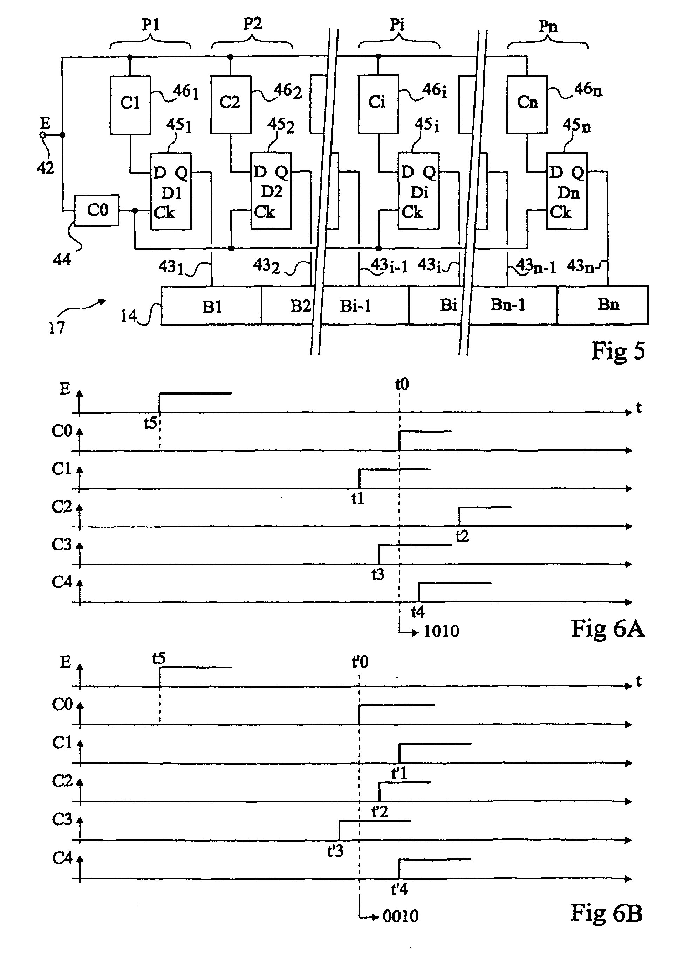

Un mode de réalisation préféré d'un réseau de paramètres physiques sera illustré par la suite en relation avec la figure 5. Toutefois, on pourra également recourir à un réseau classique de paramètres physiques consistant, par exemple, à mesurer des paramètres électriques. Il peut s'agir, par exemple, d'une mesure d'une tension seuil d'un transistor, d'une mesure d'une résistance ou d'une mesure de capacités parasites, d'une mesure de courant produit par une source de courant, d'une mesure de constante de temps (par exemple, un circuit RC), d'une mesure d'une fréquence d'oscillation, etc. Comme ces caractéristiques sont sensibles aux dispersions technologiques et de procédés de fabrication, on peut considérer que le ou les paramètres électriques pris en compte sont propres à une fabrication et constituent à tout le moins une signature des circuits intégrés issus de cette fabrication, voire une signature individuelle de chaque puce. Une réalisation d'un réseau de paramètres physiques consistant à mesurer des paramètres électriques présents dans le réseau sous la forme de résistances, de capacités parasites ou analogue est classique. En guise de réseau de paramètres physiques, on pourra également recourir à des circuits faisant appel à une mesure temporelle. Par exemple, on mesure le temps de lecture/écriture d'une mémoire de type EEPROM. Un exemple de réseau de paramètres physiques de ce type est décrit dans le brevet américain n° 5818738. Dans un mode de réalisation préféré du réseau de paramètres physiques qui sera décrit en relation avec les figures 5 et 6, on verra même que la donnée physique pourra au choix être liée à un lot de fabrication ou personnalisée d'une puce à l'autre.

La figure 4 représente une puce de circuit intégré 20 illustrant un deuxième exemple d'application de la présente invention. Selon cet exemple, la donnée stockée de façon protégée par la mise en oeuvre de l'invention est une adresse ADD d'un programme stocké dans une mémoire 21 non volatile (ROM) de la puce de circuit intégré 20. Cet exemple d'application sert donc à protéger un programme stocké en ROM pour éviter les duplications non autorisées de ce programme et rendre plus difficile le piratage ou la compréhension de l'algorithme (par exemple, de cryptage) utilisé par ce programme.

Comme dans l'exemple de la figure 3, une adresse ADD devant être stockée dans la puce de circuit intégré 20 est envoyée sur un circuit 13 de combinaison ou de codage (COMB). Le circuit 13 reçoit une donnée physique issue, comme précédemment, d'un registre 14 stockant de préférence temporairement une donnée numérique issue d'une mesure de paramètres d'un réseau de paramètres physiques 17 (PPN). Le résultat de la combinaison de l'adresse ADD et de la donnée p est stocké dans une table d'adresse 18 (ADD-TABLE) sous la forme d'une adresse brouillée ADD'.

Lors de l'écriture du code (programme) qui doit être stocké dans la mémoire morte 21, certaines adresses (par exemple, celles des périphériques) sont remplacées par l'adresse d'un circuit de décodage 15 (DECOD) en étant respectivement associées à des identifiants correspondant aux lignes respectives de la table d'adresse 18 où sera stockée l'adresse ADD' brouillée du périphérique correspondant. Dans l'exemple de la figure 4, on a illustré une opération de lecture READ faisant appel au décodeur DECOD 15 et à la position 18a de la table 18.

Lors de la personnalisation de la puce 20, le circuit de combinaison 13 brouille les différentes adresses avant de les stocker dans la table 18. Seule la position de ces adresses dans la table 18 est fournie à la puce pour leur stockage.

En phase d'utilisation du programme, lorsqu'une ligne d'exécution fait appel à l'adresse du circuit de décodage 15, celui-ci déclenche (par des moyens non représentés) l'extraction de la donnée physique p depuis le réseau 17. Le circuit 15 lit également l'adresse brouillée ADD' dans la table 18 à partir de la position 18a qui lui est fournie par la ligne d'exécution du programme. Le circuit 15 fournit alors l'adresse ADD décodée à l'unité centrale de traitement (non représentée) qui peut alors exécuter les instructions demandées à l'adresse réelle du périphérique. On voit donc que, par la mise en oeuvre de l'invention, l'adressage se fait de manière indirecte.

Un avantage de l'invention dans son application à la protection des programmes est que les adresses sensibles ne sont pas stockées en clair dans une mémoire non volatile.

Le désassemblage du code inscrit dans cette mémoire ne contient donc pas les adresses des périphériques, ce qui rend plus difficile un piratage de l'algorithme de l'application à partir d'un examen du programme stocké en ROM.

Outre ces avantages particuliers à l'application, les mêmes avantages que ceux décrits en relation avec le stockage d'une donnée sont présents. En particulier, le codage peut être différent d'une puce à l'autre ou à tout le moins d'un lot de fabrication à un autre.

La figure 5 représente le schéma électrique d'un mode de réalisation préféré d'un réseau de paramètres physiques selon la présente invention. Dans cet exemple, le réseau 17 comporte une unique borne 42 d'entrée destinée à recevoir un signal numérique E de déclenchement d'une génération de la donnée physique p à stocker dans le registre 14. Pour la mise en oeuvre de l'invention, le signal E doit comprendre, comme on le verra par la suite en relation avec les figures 6A et 6B, au moins un front par génération (c'est-à-dire par besoin d'écriture ou de lecture de la donnée protégée dans la mémoire 11).

Le circuit 17 fournit directement un code binaire B₁, B₂, ... Bᵢ₋₁, Bᵢ, ..., Bₙ₋₁, Bₙ sur un nombre de bits prédéterminé. Chaque bit Bᵢ est fourni sur une borne 43₁, 43₂, ..., 43ᵢ₋₁, 43ᵢ, ..., 43ₙ₋₁, 43ₙ du circuit 17 qui lui est propre. Le circuit 17 délivre donc la donnée physique sous forme parallèle.

A chaque bit Bᵢ de la donnée physique est associé un chemin électrique P₁, P₂, ... P_{i, ...,} Pₙ reliant la borne d'entrée commune 42 à une borne 43ᵢ de même rang.

On voit donc déjà que, par les différents retards apportés par les chemins électriques, le front déclencheur du signal d'entrée E est reproduit sur les différentes sorties à des instants différents.

On prévoit d'effectuer la lecture de l'information présente aux sorties du circuit 17 de façon synchronisée et à un instant correspondant, de façon approximative, au retard moyen théorique entre les différents chemins électriques. Plus précisément, selon le mode de réalisation illustré par la figure 5, on prévoit un chemin électrique moyen 44 (C0) pour fixer l'instant de lecture à partir de l'apparition du front déclencheur du signal d'entrée E.

Par exemple, le chemin 44 de l'entrée 42 du circuit 17 est relié aux bornes CK de bascules 45₁, 45₂, ..., 45ᵢ, ... 45ₙ, faisant partie des chemins électriques respectifs P₁, P₂, ..., Pᵢ, ..., Pₙ et dont les sorties respectives Q constituent les bornes 43₁, 43₂, ..., 43ᵢ, ..., 43ₙ, de sortie du circuit 17. Selon ce mode de réalisation, chaque chemin électrique Pᵢ comporte un élément retardateur 46₁ (C1), 46₂ (C2), ..., 46ᵢ (Ci), ..., 46ₙ (Pn) reliant l'entrée 42 du circuit à l'entrée D de la bascule correspondante du chemin. Les éléments retardateurs 46ᵢ sont les éléments qui présentent, selon la présente invention, les retards différents les uns par rapport aux autres. En effet, les bascules 45ᵢ ont, de préférence, la même constitution. Elles participent toutefois au retard apporté au signal d'entrée jusqu'aux bornes de sortie respectives du circuit 17 par rapport au retard moyen C0 apporté par l'élément 44.

Lorsqu'on applique un front sur le signal d'entrée E, ce front arrive sur les entrées D respectives à des instants différents. La lecture de l'état de d'entrée des différentes bascules est synchronisée par le front du signal retardé cette fois, par l'élément 44. C'est notamment pour cette raison que l'on choisit préférentiellement un retard C0 correspondant approximativement au retard moyen des différents éléments 46ᵢ.

Dans l'exemple de la figure 5, les différentes sorties 43ᵢ du circuit 17 sont reliées individuellement en entrée du registre 14 de mémorisation du code binaire obtenu, chaque bit Bᵢ correspondant à l'une des sorties du circuit.

Les figures 6A et 6B illustrent sous forme de chronogrammes, le fonctionnement du réseau 17 de la figure 5. Les figures 6A et 6B représentent des exemples d'allure du signal E, et des signaux en sortie des différents éléments retardateurs. Dans l'exemple des figures 6A et 6B, on considère pour simplifier le cas d'un code binaire sur quatre bits. Les chronogrammes ont été désignés par les références C0, C1, C2, C3 et C4.

La différence entre les figures 6A et 6B représente la différente entre deux circuits intégrés sur des puces issues de fabrications différentes.

En figure 6A, on suppose qu'à un instant t5, on déclenche un front montant sur le signal E. Ce front apparaît sur les différentes entrées des bascules D correspondantes aux sorties des éléments retardateurs C1, C2, C3 et C4 à des instants respectifs différents t1, t2, t3 et t4. Par ailleurs, l'élément 44 (C0) apporte un retard déclenchant la lecture des données en entrée des bascules à un instant t0. Tous les chemins qui génèrent un retard supérieur au retard C0 fournissent un bit à l'état 0 dans la mesure où le front du signal E ne leur est pas encore parvenu. Tous les chemins qui génèrent un délai inférieur au délai C0 fournissent un bit à l'état 1 dans la mesure où le front du signal E arrive sur l'entrée de la bascule correspondante avant l'expiration du délai C0. Dans l'exemple de la figure 6A, à l'instant t0, on fournit le code 1010 comme donnée p de brouillage ou de décodage selon que la donnée d est écrite ou lue.

La figure 6B illustre le même circuit issu d'un procédé de fabrication différent donnant donc une puce différente. Le code obtenu y est différent. Par exemple, il s'agit du code 0010. En figure 6B, on a fait apparaître arbitrairement un instant t5 identique au cas de la figure 6A. Par contre, les instants t'0, t'1, t'2, t'3 et t'4 auxquels le front du signal E a terminé de parcourir les chemins respectifs C0, C1 C2, C3 et C4 sont différents du cas de la figure 6A.

On remarquera que l'élément retardateur C0 est sensible aux dispersions technologiques et de procédé de fabrication. Cela n'a cependant pas d'incidence pour la mise en oeuvre de l'invention dans la mesure où ce retard représente un retard moyen et où le code recherché est arbitraire. En effet, pour le codage de la donnée à mémoriser selon l'invention, ce qui est important c'est que le réseau de paramètres physiques génère la même donnée physique p lors de l'utilisation du circuit par rapport à celle qu'il a généré lors de la mémorisation de la donnée à protéger.

De préférence, les retards apportés par les différents chemins Pᵢ sont fixés (choisis) suffisamment voisins les uns des autres pour qu'une dispersion technologique ou de procédé de fabrication entraîne un code différent. Selon un premier exemple de réalisation, tous les retards sont identiques pour toutes les puces d'une plaquette. Dans ce cas, toutes les puces d'un même lot fourniront un même paramètre p et on se protège contre des fabrications en série de puces pirates. Selon un deuxième exemple de réalisation, les retards sont différents pour chaque puce (avec une probabilité de répétition dépendant bien entendu du nombre de bits de la donnée physique p). Dans ce cas, chaque puce possède un code de cryptage aléatoire qui lui est propre est qui est quasi inviolable. En pratique, on pourra individualiser les chemins ou prévoir de combiner les bits du mot p différemment d'une puce à l'autre. On pourra également réduire au minimum les différences entre les retards en les prévoyant identiques. Ils deviennent alors très sensibles aux dispersions technologiques et sont différents d'une puce à l'autre.

En variante, les retards des différents chemins sont fixés suffisamment différents les uns des autres pour être insensibles aux dispersions technologiques. Le réseau de paramètres physiques sert alors de moyen de mémorisation de la donnée physique qui est prédéterminée. Si cette variante offre moins de sécurité que les autres modes de réalisation, elle n'est toutefois pas à exclure. Cette variante s'applique plus particulièrement à une individualisation d'un lot de puces à un autre, mais les contraintes économiques rendent moins intéressante son application à l'individualisation d'une puce à l'autre d'un même lot.

Pour réaliser les éléments retardateurs des chemins électriques du réseau 17 de la figure 5, on pourra utiliser n'importe quels éléments intégrés sensibles aux dispersions technologiques ou influencés par le procédé de fabrication. Il pourra s'agir, par exemple, des séries de résistances et/ou de condensateurs. Pour les résistances, on pourra recourir à des résistances dans l'épaisseur du circuit intégré, mais on préférera utiliser des résistances en silicium polycristallin dont la valeur est liée à la géométrie et qui ont pour avantage d'être moins dépendantes de la température. Bien entendu, les éléments retardateurs pourront prendre d'autres formes, pourvu d'être de préférence sensibles aux dispersions technologiques et/ou de procédés de fabrication. De plus, le choix de la plage de variations des retards apportés par les différents éléments dépend de l'application et de la sensibilité souhaitée.

Un avantage du réseau de paramètres physiques illustré par la figure 5, est qu'il est particulièrement sensible. En pratique, la différence détectable des retards apportés par les différents chemins est de l'ordre de la picoseconde. Or, les dispersions des procédés de fabrication technologiques apportent le plus souvent des différences de l'ordre d'au moins une dizaine de picosecondes.

Un autre avantage est qu'en cas de dérive dans le temps d'un des retards apportés par les éléments, cela n'affecte pas les résultats du circuit. En effet, tous les éléments de retard étant de préférence de constitution similaire, la dérive sera dans le même sens pour tous les éléments (chemins).

Un autre avantage du réseau de paramètres physiques de la figure 5 est qu'il évite le recours à un convertisseur analogique/numérique comme ce serait le cas d'un réseau de paramètres physiques mesurant, par exemple, des variations de tension. En effet, le mot binaire p est, dans la figure 5, directement délivré par les sorties respectives des bascules.

Bien entendu, la présente invention est susceptible de diverses variantes et modifications qui apparaîtront à l'homme de l'art. En particulier, le type de combinaison (et donc de décodage) à appliquer à la donnée à protéger et aux paramètres physiques sera choisi en fonction de l'application parmi les diverses méthodes classiques. Par exemple, il pourra s'agir d'une simple concaténation ou addition, voire d'un algorithme de cryptage plus complexe. De plus, la taille (nombre de bits) de la donnée physique dépend de la sécurité souhaitée pour le système. Celle-ci a été illustrée sous la forme de quatre bits dans l'exemple des figures 5 et 6. Elle est toutefois généralement beaucoup plus importante (de l'ordre de la centaine de bits voire davantage).

Par ailleurs, on a fait référence à des registres de stockage qui pourront être remplacés par tout élément de mémorisation adapté, par exemple, des mémoires ou des parties de mémoire volatiles ou non selon le type de données stockées. En outre, l'écriture et la lecture des données dans ces éléments de mémorisation pourront être séries ou parallèles.

En outre, la réalisation pratique des circuits nécessaires à la mise en oeuvre de l'invention est à la portée de l'homme du métier en utilisant des techniques classiques et à partir des indications fonctionnelles données ci-dessus.

Enfin, bien que l'invention ait été plus particulièrement décrite en relation avec l'utilisation d'une donnée à protéger et d'un réseau de paramètres physiques, on pourra prévoir d'utiliser plusieurs données physiques (mots de paramètres physiques) par puce de circuit intégré (par exemple, au moyen de plusieurs réseaux de paramètres physiques ou au moyen d'un même réseau commutable). Ces différents mots peuvent alors, par exemple, être utilisés pour brouiller des éléments de nature différente (adresse, données, clé, etc.). On pourra également prévoir d'utiliser plusieurs circuits de décodage et de combinaison n'utilisant qu'une partie d'un même mot de paramètres physiques sur un grand nombre de bits, ou utilisant une ou plusieurs combinaisons logiques des bits de ce mot. Les mêmes variantes sont possibles, côté données à protéger où, de façon générale, le procédé de l'invention s'applique à toute donnée numérique que l'on souhaite lier à un support et mémoriser dans une mémoire interne ou externe à ce support. Toutes les variantes exposées sont bien entendu combinables.

## Revendications

1. Procédé de stockage, dans une mémoire, d'au moins une première donnée constituée d'une adresse (ADD) d'un programme, **caractérisé en ce qu'**il consiste :
à effectuer une combinaison (3, 13) de ladite première donnée avec au moins une deuxième donnée physique (p) issue d'au moins un réseau de paramètres physiques (17) d'un circuit intégré (20) ; et
à mémoriser uniquement le résultat de cette combinaison, les adresses de certains périphériques étant, lors de l'écriture du programme, remplacées par l'adresse d'un circuit de décodage (15) associée à la position (18a) d'une adresse protégée (ADD') dans une table d'adresse (18).

2. Procédé selon la revendication 1, **caractérisé en ce que** ladite deuxième donnée physique (p) est sensible aux dispersions technologiques et de fabrication dudit circuit intégré (10, 20) qui intègre ledit réseau de paramètres physiques (17).

3. Procédé selon la revendication 1, **caractérisé en ce qu'**au moins une adresse (ADD) de périphérique est combinée avec la donnée physique (p) pour stocker l'adresse protégée (ADD') dans ladite table d'adresse (18).

4. Procédé selon l'une quelconque des revendications 1 à 3, **caractérisé en ce que** la deuxième donnée physique (p) est mémorisée (14) de façon éphémère.

5. Procédé selon l'une quelconque des revendications 1 à 4, **caractérisé en ce que** ladite combinaison (3, 13) servant à la mémorisation n'est rendue possible qu'une seule fois.

6. Procédé selon l'une quelconque des revendications 1 à 5, **caractérisé en ce que** la donnée physique (p) est inaccessible depuis l'extérieur du circuit intégré.

7. Procédé selon l'une quelconque des revendications 1 à 6, **caractérisé en ce que** la donnée physique (p) est commune à toutes les puces d'un même lot.

8. Procédé selon l'une quelconque des revendications 1 à 7, **caractérisé en ce que** la donnée physique (p) est différente d'une puce à l'autre d'un même lot.

9. Procédé selon l'une quelconque des revendications 1 à 8, **caractérisé en ce que** la mémoire de stockage de la première donnée est interne au circuit intégré.

10. Procédé selon l'une quelconque des revendications 1 à 8, **caractérisé en ce que** la mémoire de stockage de la première donnée est externe au circuit intégré.

11. Procédé de lecture d'une donnée stockée par la mise en oeuvre du procédé selon l'une quelconque des revendications 1 à 10, **caractérisé en ce qu'**il consiste :
à lire le résultat mémorisé ; et
à utiliser ladite deuxième donnée physique (p) pour décoder (5, 15) ce résultat et restituer (6) la première donnée (ADD).

12. Procédé selon la revendication 11, **caractérisé en ce qu'**il est appliqué à la protection d'une donnée secrète (KEY) devant être stockée dans le circuit intégré (10).

13. Circuit intégré (10, 20), comportant :
au moins un réseau de paramètres physiques (17) ;
au moins un combineur (3, 13) pour coder au moins une première donnée au moyen d'une deuxième donnée physique (p) fournie par ledit réseau ;
au moins une première mémoire (11, 18) de stockage de la donnée codée ;
au moins un décodeur (5, 15) pour, en lecture, restituer la première donnée en clair en réutilisant la donnée physique,
**caractérisée en ce que** la première donnée est une adresse (ADD) d'un programme, le circuit comportant en outre une deuxième mémoire (21) de stockage du programme et la première mémoire contenant une table (18) d'adresses stockées sous une forme codée (ADD') au moyen de la donnée physique (p).

14. Circuit selon la revendication 13, **caractérisé en ce que** le combineur (3, 13) est associé à des moyens d'invalidation de son fonctionnement après une écriture d'une donnée protégée dans la première mémoire (11, 18) du circuit (10, 20).

## Claims

1. A method for storing in a memory at least one first datum constituted of an address (ADD) of a program, **characterized in that** it consists of:
performing a combination (3, 13) of said first datum with at least one second physical datum (p) coming from at least one network of physical parameters (17) of an integrated circuit (20); and
storing only the result of this combination, the addresses of some peripherals being, upon writing of the program, replaced with the address of a decoding circuit (15) associated with the position (18a) of a protected address (ADD') in an address table (18).

2. The method of claim 1, **characterized in that** said second physical datum (p) is sensitive to the technological and manufacturing dispersions of said integrated circuits (10, 20) that incorporate said network of physical parameters (17).

3. The method of claim 1, **characterized in that** at least one peripheral address (ADD) is combined with the physical datum (p), to store the protected address (ADD') in said address table (18).

4. The method of any of claims 1 to 3, **characterized in that** the second physical datum (p) is stored (14) ephemerally.

5. The method of any of claims 1 to 4, **characterized in that** said combination (3, 13) used for the storage is made available only once.

6. The method of any of claims 1 to 5, **characterized in that** the physical datum (p) is inaccessible from the outside of the integrated circuit.

7. The method of any of claims 1 to 6, **characterized in that** the physical datum (p) is common to all chips in a same batch.

8. The method of any of claims 1 to 7, **characterized in that** the physical datum (p) is different from one chip to the other in a same batch.

9. The method of any of claims 1 to 8, **characterized in that** said storage memory of the first datum is internal to the integrated circuit.

10. The method of any of claims 1 to 8, **characterized in that** said storage memory of the first datum is external to the integrated circuit

11. A method for reading a datum stored by the implementation of the method of any of claims 1 to 10, **characterized in that** it consists of:
reading the stored result; and
using said second physical datum (p) to decode (5, 15) said result and provide (6) the first datum (ADD).

12. The method of claim 11, **characterized in that** it is applied to the protection of a secret datum (KEY) to be stored in the integrated circuit (10).

13. An integrated circuit (10, 20), including:
at least one network of physical parameters (17);
at least one combiner (3, 13) for coding at least one first datum by means of a second physical datum (p) provided by said network;
at least one first memory (11, 18) for storing the coded datum,
at least one decoder (5, 15) for, in read mode, providing back the first datum, uncoded, by reusing the physical datum,
**characterized in that** the first datum is an address (ADD) of a program, the circuit further including a second memory (21) for storing the program, the first memory containing a table (18) of addresses stored in coded form (ADD') by means of the physical datum (p).

14. The circuit of claim 13, **characterized in that** the combiner (3, 13) is associated with means for invalidating its operation after a writing of a protected datum into the first memory (11, 18) of the circuit (10, 20).

## Patentansprüche

1. Verfahren zum Speichern in einem Speicher wenigstens eines ersten gegebenen Werts, der aus einer Adresse (ADD) eines Programms besteht, **dadurch gekennzeichnet, dass** das Verfahren folgendes aufweist:
Durchführen einer Kombination (3, 13) des ersten gegebenen Werts mit wenigstens einem zweiten physikalischen gegebenen Werts (p), der aus wenigstens einem Netzwerk aus physikalischen Parametern (17) einer integrierten Schaltung (20) stammt; und
Speichern nur des Ergebnisses dieser Kombination, wobei die Adressen einiger Peripherieelemente beim Schreiben auf das Programm mit der Adresse einer Decodierschaltung (15) ersetzt werden, die mit der Position (18a) einer geschützten Adresse (ADD') in einer Adresstabelle (18) assoziiert ist.

2. Verfahren nach Anspruch 1, **dadurch gekennzeichnet, dass** der zweite physikalische gegebene Wert (p) empfindlich ist auf technologische und Herstellungsveränderungen der integrierten Schaltungen (10, 20), welche das Netzwerk von physikalischen Parametern (17) beinhaltet.

3. Verfahren nach Anspruch 1, **dadurch gekennzeichnet, dass** wenigstens eine Peripherieadresse (ADD) mit dem physikalischen gegebenen Wert (p) kombiniert wird zum Speichern der geschützten Adresse (ADD') in der Adresstabelle (18).

4. Verfahren nach einem der Ansprüche 1 bis 3, **dadurch gekennzeichnet, dass** der zweite physikalische gegebene Wert (p) kurzzeitig gespeichert wird (14).

5. Verfahren nach einem der Ansprüche 1 bis 4, **dadurch gekennzeichnet, dass** die Kombination (3, 13), die für die Speicherung verwendet wird, nur einmal verfügbar gemacht wird.

6. Verfahren nach einem der Ansprüche 1 bis 5, **dadurch gekennzeichnet, dass** der physikalische gegebene Wert (p) von außerhalb der integrierten Schaltung nicht zugänglich ist.

7. Verfahren nach einem der Ansprüche 1 bis 6, **dadurch gekennzeichnet, dass** der physikalische gegebene Wert (p) für alle Chips einer gemeinsamen Charge gleich ist.

8. Verfahren nach einem der Ansprüche 1 bis 7, **dadurch gekennzeichnet, dass** der physikalische gegebene Wert (p) für jeden Chip in einer gleichen Charge unterschiedlich ist.

9. Verfahren nach einem der Ansprüche 1 bis 8, **dadurch gekennzeichnet, dass** der Speicher für den ersten gegebenen Wert innerhalb der integrierten Schaltung vorgesehen ist.

10. Verfahren nach einem der Ansprüche 1 bis 8, **dadurch gekennzeichnet, dass** der Speicher für den ersten gegebenen Wert außerhalb der integrierten Schaltung vorgesehen ist.

11. Verfahren zum Lesen eines gegebenen Werts, der durch die Implementierung des Verfahrens nach einem der Ansprüche 1 bis 10 gespeichert wurde, **dadurch gekennzeichnet, dass** das Verfahren folgendes aufweist:
Lesen des gespeicherten Ergebnisses; und
Verwenden des zweiten physikalischen gegebenen Werts (p) zum Decodieren (5, 15) des Ergebnisses und zum Vorsehen (6) des ersten gegebenen Werts (ADD).

12. Verfahren nach Anspruch 11, **dadurch gekennzeichnet, dass** es für den Schutz eines geheimen gegebenen Werts (KEY) verwendet wird, der in der integrierten Schaltung (10) gespeichert werden soll.

13. Integrierte Schaltung (10, 20), die folgendes umfasst:
wenigstens ein Netzwerk aus physikalischen Parametern (17);
wenigstens einen Kombinierer (3, 13) zum Codieren wenigstens eines ersten gegebenen Werts mittels eines zweiten physikalischen gegebenen Werts (p), der durch das Netzwerk vorgesehen wird;
wenigstens einen ersten Speicher (11, 18) zum Speichern des codierten gegebenen Werts; wenigstens einen Decodierer (5, 15), um in einem Lesemodus den ersten gegebenen Wert uncodiert vorzusehen durch Wiederverwendung des physikalischen gegebenen Werts,
**dadurch gekennzeichnet, dass** der erste gegebene Wert eine Adresse (ADD) eines Programms ist, wobei die Schaltung ferner einen zweiten Speicher (21) aufweist zum Speichern des Programms, wobei der erste Speicher eine Tabelle (18) von Adressen aufweist, die in codierter Form (ADD') mittels des physikalischen gegebenen Werts (p) gespeichert sind.

14. Schaltung nach Anspruch 13, **dadurch gekennzeichnet, dass** der Kombinierer (3, 13) mit Mitteln assoziiert ist zum Invalidieren ihrer Operationen nach einem Schreiben eines geschützten gegebenen Werts in den ersten Speicher (11,18) der Schaltung (10, 20).
